(19) Europäisches Patentamt
European Patent Office
Office européen des brevets

(11) **EP 4 737 062 A1**

(12) **EUROPEAN PATENT APPLICATION**
published in accordance with Art. 153(4) EPC

(43) Date of publication:
**06.05.2026  Bulletin 2026/19**

(21) Application number: **24855568.2**

(22) Date of filing: **30.07.2024**

(51) International Patent Classification (IPC):
***B24D 7/10*** (2006.01)

(52) Cooperative Patent Classification (CPC):
Y02P 70/10

(86) International application number:
**PCT/CN2024/108329**

(87) International publication number:
**WO 2025/039842 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.08.2023  CN 202311043155**

(71) Applicants:
• **GUILIN GRIND-ACADEMY MATERIAL
TECHNOLOGY CO., LTD.**
**Guangxi 541004 (CN)**

• **Guilin Champion Union Diamond Co., Ltd.**
**Guilin, Guangxi 541004 (CN)**

(72) Inventors:
• **SONG, Jingxin**
**Guilin, Guangxi 541004 (CN)**
• **LIANG, Anning**
**Guilin, Guangxi 541004 (CN)**

(74) Representative: **Metida**
**Gyneju str. 16**
**01109 Vilnius (LT)**

(54) **SUPERHARD MATERIAL GRINDING TOOL FOR DIFFICULT-TO-MACHINE MATERIAL AND GRINDING PROCESS**

(57)     Disclosed is a superhard material abrasive tool for difficult-to-grind materials and grinding process thereof. The superhard material abrasive tool comprises a first substrate (1), a pressing plate (2) and a plurality of grinding segments (3), wherein the first substrate (1) is of an annular structure, the plurality of grinding segments (3) are distributed in a circumferential direction of the first substrate (1) and assembled into an annular structure, and a radial water channel (4) is formed between two grinding segments (3); the pressing plate (2) is of an annular structure and is fixedly mounted at one end of the first substrate (1) for tightly pressing the plurality of grinding segments (3); and a mixed cooling passage (5) is formed between the pressing plate (2) and the first substrate (1) for feeding grinding fluid and/or cooling fluid; each grinding segment (3) comprises a plurality of abrasive particles, and the thickness **h** of the grinding segment (3) and the particle size **b** of the abrasive particles satisfy the following formula: **b≤h < 2b.** The abrasive tool can superimpose auxiliary means based on the particularities of different difficult-to-machine materials to improve grinding efficiency and quality.

FIG. 1

**Description**

TECHNICAL FIELD

The disclosure relate to the technical field of grinding, in particular to a superhard material abrasive tool and grinding process for difficult-to-machine materials.

BACKGROUND ART

Difficult-to-grind materials mainly refer to ceramics, stainless steels, cemented carbides, titanium alloys, heat-resistant alloys, aluminum alloys, composite materials, etc. During the grinding of difficult-to-grind materials, chipping and damage of workpiece are prone to occur; intense chemical affinity between the workpiece and abrasive particles at high temperatures tends to cause plastic failure of the abrasive particles of the grinding wheel, resulting in massive fragmentation; grinding chips are likely to adhere to the surface of abrasive particles, and severe adhesion can rapidly dull the working surface of the grinding wheel, leading to loss of grinding ability; grinding chips, especially tough non-powdery chips, are difficult to discharge and tend to clog the spaces between the exposed abrasive particles on the working surface of the grinding wheel, causing less amount of cutting by the abrasive particles or even complete loss of grinding ability; the abrasive particles of the grinding wheel are susceptible to accelerated wear and dulling due to heat, leading to decreased cutting pressure of the abrasive particles as well as slippage and difficult to grind during operation; burn marks and cracks may appear on the surface of workpiece. The main grinding characteristics of different difficult-to-grind materials mainly include high temperature in the grinding zone, severe abrasive tool wear, low grinding efficiency, and large grinding force.

The traditional adaptation technology of the three key elements of abrasive tools-"abrasive particles, bond, and pores"-has been the main technical route for improving abrasive tool performance over the past decades. However, this technical route has not yet solved the major industrial technical problems in the grinding of difficult-to-grind materials. Currently, various attempts have been made for processing different difficult-to-grind materials, such as superimposing ultrasonic-assisted grinding technique, composite material grinding wheel technique, and intelligent control technique for the grinding process into traditional grinding techniques. While these attempts have achieved certain results, challenges and difficulties still remain, and it is still difficult to meet the requirements of high-speed, high-precision, and high-quality machining.

SUMMARY OF THE INVENTION

The object of the present invention is to provide a superhard material abrasive tool and a grinding process for difficult-to-machine materials, aiming to address the problems existing in the prior art.

The present disclosure solves the above technical problem through the following technical solution:

A superhard material abrasive tool for difficult-to-machine materials comprises a first substrate, a pressing plate, and a plurality of grinding segments, wherein the first substrate has an annular structure, the multiple grinding segments are distributed in the circumferential direction of the first substrate and assembled into an annular structure, and a radial water channel is formed between every two adjacent grinding segments; the pressing plate has an annular structure and is fixedly mounted at one end of the first substrate for pressing the multiple grinding segments tightly; a mixed cooling passage for feeding grinding fluid and/or cooling fluid is formed between the pressing plate and the first substrate, a fluid inlet communicated with the mixed cooling passage is formed between one end of the pressing plate and one end of the first substrate, and the multiple water channels are respectively in communication with the mixed cooling passage; each grinding segment includes a plurality of abrasive particles, and the thickness h of each grinding segment and the particle size b of the abrasive particles satisfy the following formula:

$$b \leq h < 2b$$

That is, in the circumferential direction of any point on the working surface of the grinding segment, it is impossible to accommodate two abrasive particles of the same exposed height and the same particle size.

Where, the units of the thickness h of each grinding segment and the particle size b of the abrasive particles are both decimillimeters (dmm).

The beneficial effects of the present solution are as follows: during assembly, the driving end of a driving member (e.g., a motor) extends into the center of the first substrate and is fixedly connected thereto;

in the machining process, the working layer composed of the first substrate, the pressing plate and the multiple grinding segments is driven to rotate by the driving member to perform grinding on the workpiece;

in this process, cooling fluid is fed into the mixed cooling passage from the fluid inlet through a manner conceivable to those skilled in the art, and the cooling fluid reaches the working surface of the abrasive tool through the multiple water channels for cooling;

meanwhile, grinding fluid is fed into the mixed cooling passage through the fluid inlet, and the grinding fluid reaches the grinding zone of the abrasive tool through the multiple water channels to grind the workpiece to be machined and the multiple grinding segments. The design is reasonable, ensuring the efficiency and quality for grinding the workpiece.

The present solution is reasonable in design and simple in process. It can superimpose auxiliary means according to the particularities of different difficult-to-grind materials, thereby improving grinding efficiency and grinding quality.

On the basis of the above technical solution, the present invention can be further improved as follows.

Further, the multiple grinding segments are respectively distributed on the circumference of the first substrate, and the parts of one ends of the grinding segments on their inner sides is recessed to form an annular step; the outer side of the pressing plate presses the annular step tightly.

The beneficial effect of adopting the above further solution is that it has simple structure and reasonable design; the annular structure formed by the multiple grinding segments is distributed on the circumferential surface of the first substrate, and the entire abrasive tool grinds the workpiece through the working layer on its circumferential surface during rotation, facilitating grinding operations.

Further, the parts of the opposite sides of two adjacent grinding segments on their inner sides are respectively recessed to form the water channel; and the parts of both sides of one of the grinding segments on its outer side are wavy and form the water channel with an adjacent grinding segment.

The beneficial effect of adopting the above further solution is that the structural design of the grinding segments is reasonable; it can not only form water channels for fluid to pass through to achieve cooling and grinding effects, but also the wavy design on the grinding segments can play a supporting role to enhance the rigidity and strength of the entire working layer, prolonging the service life of the grinding segments and reducing cost.

Further, the multiple grinding segments are located at the edge of one end of the first substrate, and the pressing plate presses the inner side of the edge of one end of the multiple grinding segments tightly.

The beneficial effect of adopting the above further solution is that it has simple structure and reasonable design; the annular structure formed by the multiple grinding segments is distributed on the edge of one end of the first substrate, and the entire abrasive tool grinds the workpiece through the working layer on its end surface during rotation, facilitating grinding operations.

Further, a plurality of blades are fixedly mounted at uniform intervals in the circumferential direction on the part of the first substrate corresponding to the inside of the mixed cooling passage; the multiple blades are respectively arranged perpendicular to the first substrate and extend in the radial direction of the first substrate.

The beneficial effect of adopting the above further solution is that it has simple structure and reasonable design; the radial arrangement of the multiple blades can accelerate the fluid to a certain extent, achieving better cooling and grinding effects.

Further, a second substrate is fixedly mounted on the first substrate, the outer side of the second substrate extends beyond the outer side of the first substrate and wraps around the circumference of the first substrate, and the pressing plate is located between the first substrate and the second substrate.

The beneficial effect of adopting the above further solution is that it has simple structure and reasonable design; the second substrate can further enhance the assembly stability of the entire abrasive tool.

Further, the multiple grinding segments are grouped in pairs, between the two grinding segments in each group, a water channel with an open inner side at one end and a closed outer side is formed; between two adjacent groups of grinding segments, a water channel with open inner side and open outer side at one end is formed.

The beneficial effect of adopting the above further solution is that it has simple structure and reasonable design; the multiple grinding segments are used to form water channels with different structures, which prolong the residence time of the grinding fluid in the grinding zone and the working surface, further improving the cooling and grinding effects, and ensuring the grinding quality of the workpiece.

Further, a plurality of bosses are fixedly mounted at uniform intervals on both sides of each grinding segment, and each boss is attached to a corresponding side of a corresponding grinding segment.

The beneficial effect of adopting the above further solution is that the reasonable design of the multiple bosses can enhance the rigidity and strength of the entire working layer, prolong the service life of each grinding segment, reduce costs, and will not affect the flow of fluid.

Further, each boss has a frustoconical structure.

The beneficial effect of adopting the above further solution is that the structural design of the bosses is reasonable, which can meet the requirements of enhancing the rigidity and strength of the entire working layer, prolonging the service life of each grinding segment, and reducing costs.

The present disclosure also relates to a grinding process using the above-mentioned superhard material abrasive tool for difficult-to-machine materials, comprising the following specific steps:

Feeding cooling fluid into the mixed cooling passage through the fluid inlet, the cooling fluid reaches the working surface of the abrasive tool through the multiple water channels for cooling;

Meanwhile, feeding grinding fluid into the mixed cooling passage through the fluid inlet, the grinding fluid reaches the grinding zone of the abrasive tool through the multiple water channels to grind the workpiece to be machined and the multiple grinding segments.

The beneficial effect of adopting the above solution is that the present invention further provides a grinding process which is reasonable in design and simple in operation, and can superimpose auxiliary means according to the particularity of different difficult-to-grind materials, thereby improving grinding efficiency and grinding quality.

BRIEF DESCRIPTION OF THE DRAWINGS

Fig. 1 is a schematic diagram of the overall structure of the first embodiment of the present invention;

Fig. 2 is a sectional view taken along line A-A in Fig. 1;

Fig. 3 is a front view of an embodiment of the present invention;

Fig. 4 is a sectional view taken along line C-C in Fig. 3;

Fig. 5 is an enlarged view of part D in Fig. 4;

Fig. 6 is a schematic diagram of a partial structure of the first embodiment of the present invention;

Fig. 7 is an enlarged view of part B in Fig. 6;

Fig. 8 is a schematic diagram of the structure of two adjacent grinding segments in the first embodiment of the present invention;

Fig. 9 is a three-dimensional diagram showing the structure of the second embodiment of the present invention;

Fig. 10 is a front view of the second embodiment of the present invention;

Fig. 11 is a schematic diagram of a partial structure of the second embodiment of the present invention;

Fig. 12 is an enlarged view of part E in Fig. 11;

Fig. 13 is a schematic diagram of a partial planar structure of the second embodiment of the present invention;

Fig. 14 is a sectional view taken along line F-F in Fig. 13;

Fig. 15 is an enlarged view of part G in Fig. 14;

Fig. 16 is a schematic diagram of the structure of two adjacent grinding segments in the second embodiment of the present invention;

Fig. 17 is a schematic diagram of a structure in which the thickness of the grinding segment is equal to the particle size of a single abrasive particle;

Fig. 18 is a schematic diagram of a structure in which the thickness of the grinding segment is equal to the particle size of an abrasive particle agglomerate.

In the drawings, the list of components represented by each reference numeral is as follows: 1. first substrate; 2. pressing plate; 3. grinding segment; 4. water channel; 5. mixed cooling passage; 6. annular step; 7. blade; 8. second substrate; 9. boss.

DETAILED DESCRIPTION OF THE EMBODIMENTS

It should be noted that the embodiments of the present invention and the features in the embodiments can be combined with each other without conflict.
In the description of the present invention, it should be understood that the terms "center", "longitudinal", "transverse", "upper", "lower", "front", "rear", "left", "right", "vertical", "horizontal", "top", "bottom", "inner", "outer" and the like indicate the orientation or positional relationship based on the drawings, which are only for the convenience of describing the present invention and simplifying the description, but do not indicate or imply that the referred device or element must have a specific orientation, be constructed and operated in a specific orientation, and thus cannot be understood as limiting the present invention. In addition, the terms "first", "second", etc. are only used for descriptive purposes, and cannot be understood as indicating or implying relative importance or implicitly indicating the number of indicated technical features. Thus, the features defined with "first", "second" may explicitly or implicitly include one or more of these features. In the description of the present invention, unless otherwise specified, the meaning of "plurality" is two or more.
In the description of the present invention, it should be noted that unless otherwise clearly specified and limited, the terms "mount", "connect" and "couple" should be understood in a broad sense, for example, it can be a fixed connection, a detachable connection, or an integral connection; it can be a mechanical connection or an electrical connection; it can be a direct connection or an indirect connection through an intermediate medium, and it can be the internal communication between two elements. For those skilled in the art, the specific meanings of the above terms in the present invention can be understood according to specific situations.
The present invention will be described in detail below with reference to the accompanying drawings and embodiments.

Embodiment 1

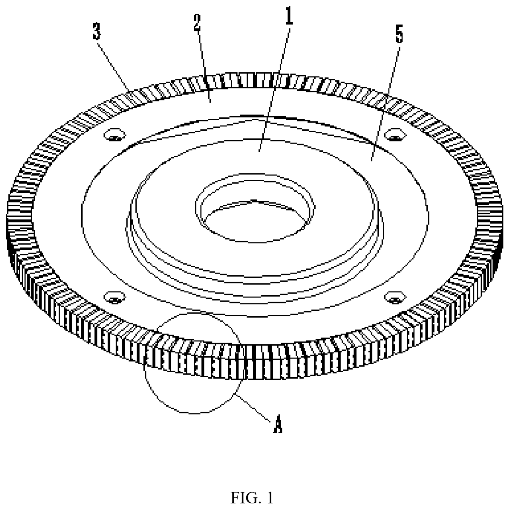

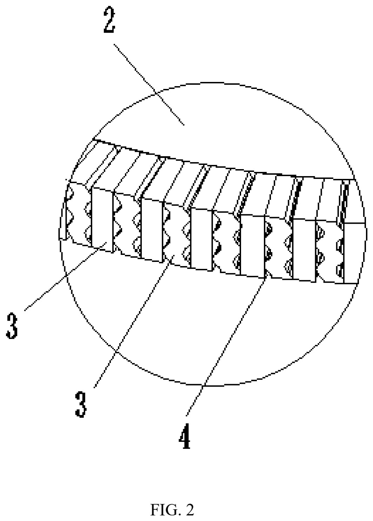

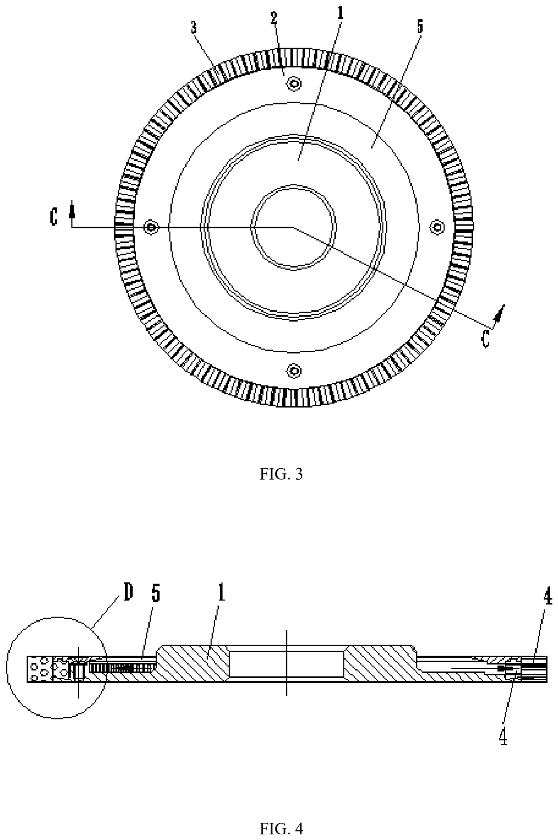

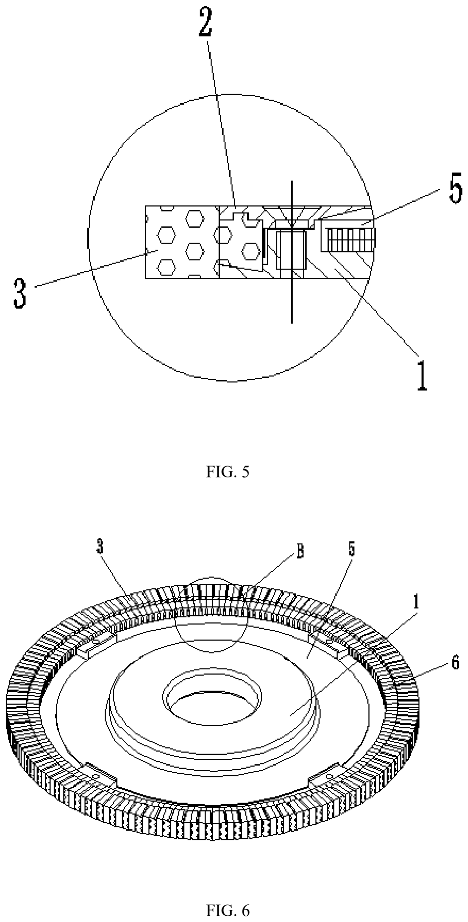

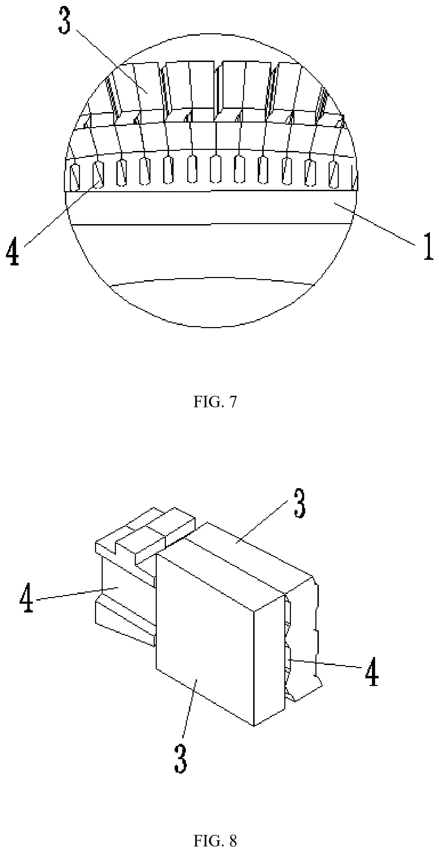

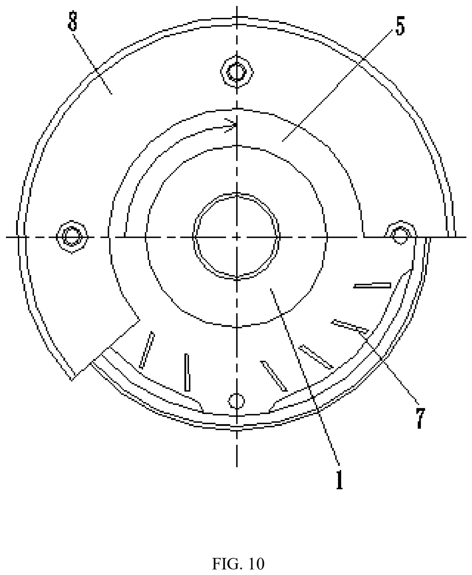

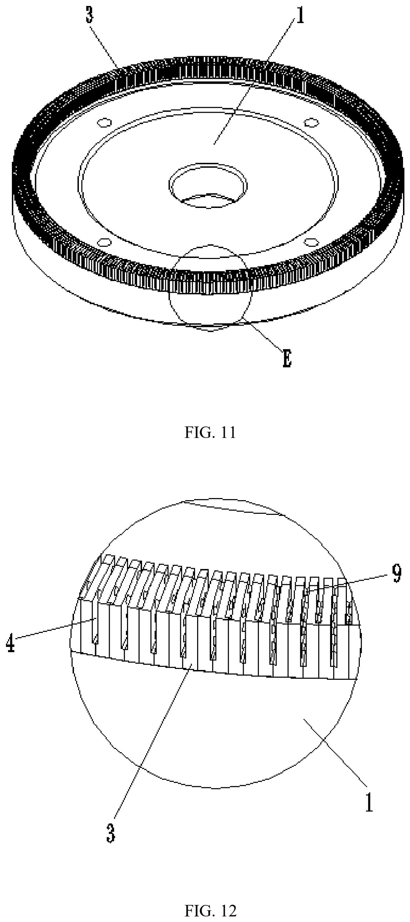

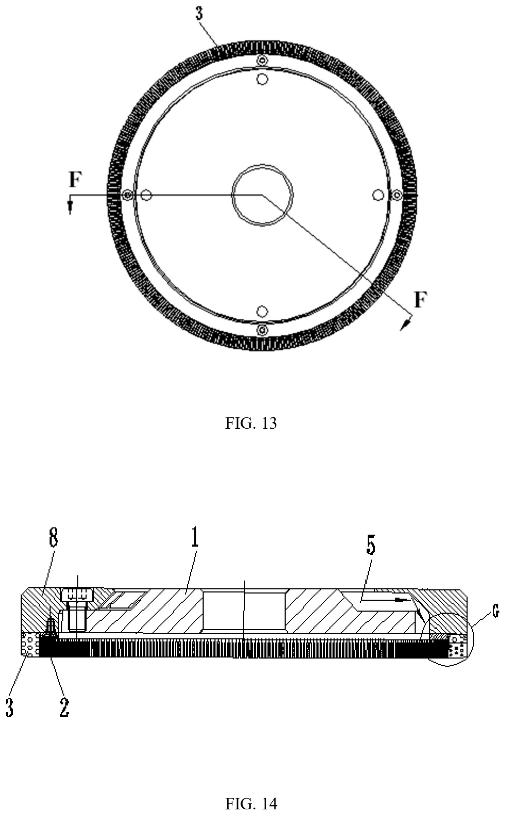

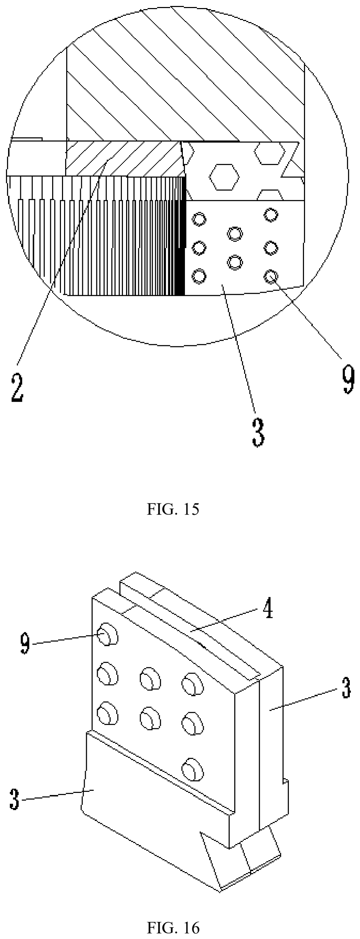

As shown in Figs. 1 to 18, the present embodiment provides a superhard material abrasive tool for difficult-to-machine materials, comprising a first substrate 1, a pressing plate 2, and a plurality of grinding segments 3. The first substrate 1 has an annular structure. The multiple grinding segments 3 are distributed in the circumferential direction of the first substrate 1 and assembled into an annular structure, with a radial water channel 4 formed between every two adjacent grinding segments 3. The pressing plate 2 has an annular structure and is fixedly mounted at one end of the first substrate 1 for pressing the multiple grinding segments 3 tightly. A mixed cooling passage 5 for feeding grinding fluid and/or cooling fluid is formed between the pressing plate 2 and the first substrate 1. A fluid inlet communicated with the mixed cooling passage 5 is formed between one end of the pressing plate 2 and one end of the first substrate 1, and the multiple water channels 4 are respectively in communication with the mixed cooling passage 5.

Each grinding segment 3 includes a plurality of abrasive particles, and the thickness **h** of each grinding segment 3 and the particle size **b** of the abrasive particles satisfy the following formula:

$$\mathbf{b \leq h < 2b.}$$

Where, the units of the thickness **h** of each grinding segment 3 and the particle size **b** of the abrasive particles are both decimillimeters (dmm).

It should be noted that the above formula is applicable to grinding wheels with dimensions of dmm and above, i.e., grinding wheels using coarse abrasive particles of decimillimeter grade and above.

In addition, during the manufacturing process of each grinding segment 3, multiple abrasive particles are bonded together by a bond to form the grinding segment 3 (prior art).

During assembly, the driving end of a driving member (e.g., a motor) extends into the center of the first substrate 1 and is fixedly connected thereto.

In the machining process, the driving member drives a working layer composed of the first substrate 1, the pressing plate 2 and multiple grinding segments 3 to rotate so as to perform grinding on the workpiece.

In this process, cooling fluid is fed into the mixed cooling passage 5 from the fluid inlet through a manner conceivable to those skilled in the art, and the cooling fluid reaches the working surface of the abrasive tool through multiple water channels 4 to perform cooling.

Meanwhile, grinding fluid is fed into the mixed cooling passage 5 through the fluid inlet, and the grinding fluid reaches the grinding zone of the abrasive tool through the multiple water channels 4 to grind the workpiece to be machined and the multiple grinding segments 3. The design is reasonable, ensuring the efficiency and quality of workpiece grinding.

Preferably, in this embodiment, a protrusion extends from the center of one end of the first substrate 1, and the mixed cooling passage 5 is formed and enclosed by the protrusion, the first substrate 1, and the pressing plate 2.

In addition, each grinding segment 3 is preferably of a sheet-like structure.

This embodiment is reasonable in design and simple in process. It can superimpose auxiliary means according to the particularity of different difficult-to-grind materials, thereby improving grinding efficiency and grinding quality.

Based on the above solution, on the one hand, an applicable cooling fluid supply device is adopted to feed cooling fluid into the inner diameter of the grinding wheel through a water passage; the cooling fluid flows into the water channels 4 from the small radial direction to the large radial direction under the action of centrifugal force; the water channels are communicated to the grinding zone (i.e., the contact area between the workpiece and the grinding wheel), so the cooling fluid is delivered to the grinding zone to cool the workpiece surface, abrasive particles, and bond in the grinding zone in an internal cooling manner.

On the other hand, a grinding fluid supply device is adopted to feed grinding fluid into the grinding zone through the same passage and path as the cooling fluid supply; the abrasive particles in the grinding fluid are in a free state, and driven by the grinding segments of the grinding wheel so as to grind the working surface of the grinding wheel (i.e., the bond surface and the exposed abrasive particle surface) and the grinding surface of the workpiece. Meanwhile, the free abrasive particles also have a scouring effect on the grinding surface of the workpiece and the wheel surface under the action of centrifugal force. The above effects of the abrasive particles can accelerate the consumption of the bond to improve the self-sharpening property of the wheel, eliminate the adherents on the workpiece, bond, and abrasive particles in the grinding zone, and remove the oxide film formed on the grinding surface of the workpiece.

A basic grinding fluid comprises water and ordinary abrasive particles, where the particle size of the ordinary abrasive particles is smaller than that of the abrasive particles of the grinding wheel to avoid scratching the workpiece surface.

A special grinding fluid can be formed by uniformly mixing a liquid with chemical properties and abrasive particles, which is conducive to performing dual chemical and grinding treatment on the parts to be treated by using the chemical action of the chemical liquid.

The abrasive particles in the grinding fluid can grind the working surface of the grinding wheel (i.e., the bond surface and the exposed abrasive particle surface) and the grinding surface of the workpiece, so as to accelerate the consumption of the bond and achieve good self-sharpening performance of the grinding wheel. This technical solution can choose a bond with high holding force, which can not only improve the utilization rate of abrasive particles, but also eliminate the adherents on the workpiece, bond, and exposed abrasive particles in the grinding zone, as well as the oxide film formed on the grinding surface of the workpiece.

Embodiment 2

On the basis of Embodiment 1, as shown in Figs. 1 to 8, in this embodiment, the multiple grinding segments 3 are respectively arranged on the circumference of the first substrate 1, and the parts of one ends of the grinding segments 3 on their inner sides are recessed to form an annular step 6; the outer side of the pressing plate 2 presses the annular step 6 tightly.

This solution has a simple structure and reasonable design, and the annular working layer formed by the multiple grinding segments 3 is arranged on the circumferential surface of the first substrate 1, and the entire abrasive tool grinds the workpiece through the working layer on its circumferential surface during rotation, facilitating grinding operations.

Based on the above solution, the annular working layer formed by the multiple grinding segments 3 is embedded in the circumferential surface of the first substrate 1.

To form the above annular step 6, each grinding segment 3 has a sheet-like structure with a thicker outer side and a thinner inner side. The inner side of each grinding segment 3 is lapped on the edge of the surface of one end of the first substrate 1 and pressed by the pressing plate 2, and the outer side of each grinding segment 3 extends beyond the circumference of the first substrate 1.

Embodiment 3

On the basis of Embodiment 2, in this embodiment, the parts of the opposite sides of two adjacent grinding segments 3, on their inner sides, are respectively recessed to form the water channels 4. The parts of both sides of one grinding segment 3 on its outer side are wavy, thereby forming the water channels 4 with the adjacent grinding segment 3.

The structural design of the grinding segments 3 is reasonable in that it can not only form water channels 4 for passing liquid to achieve cooling and grinding effects, but also the wavy design on the grinding segments 3 can play a supporting role, enhancing the rigidity and strength of the entire working layer, prolonging the service life of the grinding segments, and reducing costs.

Based on the above solution, among the multiple grinding segments 3, both sides of some grinding segments 3 are planar, while both sides of the remaining grinding segments 3 are wavy. The multiple grinding segments 3 with planar sides and the multiple grinding segments 3 with wavy sides are alternately distributed at intervals, presenting a reasonable layout. This not only ensures the smooth flow of the multiple water channels 4, but also guarantees the rigidity and strength of the entire working layer.

Embodiment 4

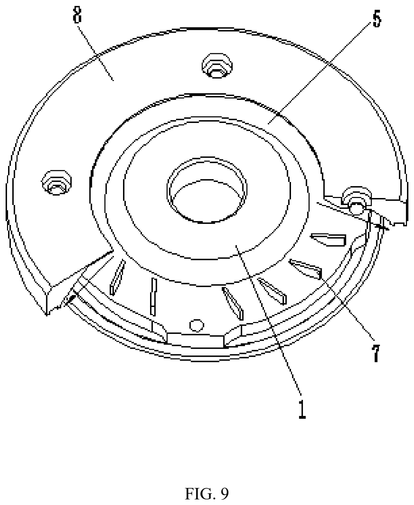

On the basis of Embodiment 1, as shown in Figs. 9 to 16, in this embodiment, the multiple grinding segments 3 are located at the edge of one end of the first substrate 1, and the pressing plate 2 presses the edge of one end of the multiple grinding segments 3 on the inner side thereof tightly.

This solution has a simple structure and reasonable design, and the annular structure formed by the multiple grinding segments 3 is distributed on the edge of one end of the first substrate 1, and the entire abrasive tool grinds the workpiece through the working layer on its end surface during rotation, facilitating grinding operations.

Based on the above solution, the working layer formed by the multiple grinding segments 3 is distributed on the end surface of one end of the first substrate 1, and the outer circumference of the working layer is flush with the outer circumference of the first substrate 1.

Embodiment 5

On the basis of Embodiment 4, in this embodiment, a plurality of blades 7 are fixedly mounted on the first substrate 1 in its circumferential direction at uniform intervals at a location corresponding to the inside of the mixed cooling passage 5. The multiple blades 7 are respectively arranged perpendicular to the first substrate 1 and extend in the radial direction of the first substrate 1.

This solution has a simple structure and reasonable design, and the radial arrangement of the multiple blades 7 can accelerate the fluid to a certain extent, achieving better scouring, cooling, and grinding effects.

Embodiment 6

On the basis of any one of Embodiments 4 to 5, in this embodiment, a second substrate 8 is fixedly mounted on the first substrate 1. The outer side of the second substrate 8 extends beyond the outer side of the first substrate 1 and wraps around the circumference of the first substrate 1, and the pressing plate 2 is located between the first substrate 1 and the second substrate 8.

This solution has a simple structure and reasonable design, and the second substrate 8 can further enhance the assembly stability of the entire abrasive tool.

Embodiment 7

On the basis of any one of Embodiments 4 to 6, in this embodiment, the multiple grinding segments 3 are grouped in pairs. A water channel 4 with an open inner side at one end and a closed outer side is formed between the two grinding segments 3 in each group, and a water channel 4 with an open inner side and an open outer side at one end is formed between two adjacent groups of grinding segments 3.

This solution has a simple structure and reasonable design, and the multiple grinding segments 3 are used to form water channels 4 with different structures, which prolong the residence time of the grinding fluid in the grinding zone and the working surface, further improving the cooling and grinding effects, and ensuring the grinding quality of the workpiece.

Embodiment 8

On the basis of any one of Embodiments 4 to 7, in this embodiment, a plurality of bosses 9 are fixedly mounted on both sides of each grinding segment 3 at uniform intervals, and each boss 9 is attached to a corresponding side of a corresponding grinding segment 3.

The reasonable design of the multiple bosses 9 can enhance the rigidity and strength of the entire working layer, prolong the service life of each grinding segment 3, reduce costs, and will not affect the flow of fluid.

Based on the above solution, the multiple bosses 9 on each grinding segment 3 can be reasonably distributed as desired.

Embodiment 9

On the basis of Embodiment 8, in this embodiment, each boss 9 has a frustoconical structure.

The structural design of the bosses 9 is reasonable and easy to manufacture. It can meet the requirements of enhancing the rigidity and strength of the entire working layer, prolonging the service life of each grinding segment, and reducing costs.

Preferably, in this embodiment, the bosses 9 on two adjacent grinding segments 3 can be distributed opposite to each other in pairs, where the opposite ends of each pair of bosses 9 abut on each other, reducing the height of the bosses and facilitating manufacture

With the functionally structured abrasive tool, there is a circumferential thin sheet-shaped tooth-like grinding ring, with gaps left between the teeth in the circumferential direction to form common channels for water passing and chip removal. This design facilitates the cooling fluid to flow from the inner diameter of the grinding wheel in the direction from small radius side to the large radius side under centrifugal force, realizing internal cooling. It also enables the grinding chips to quickly leave the grinding zone (i.e., the contact area between the grinding wheel and the workpiece) in the radial direction under centrifugal force, thereby reducing the thermal impact of frictional heat generated by the grinding chips on the abrasive particles and the workpiece. The above conditions are conducive to high-speed grinding with reduced depth of cut, improving conditions of workpiece adhesion to the abrasive particles and reducing grinding resistance, thus ensuring the precision and surface roughness of the workpiece grinding surface.

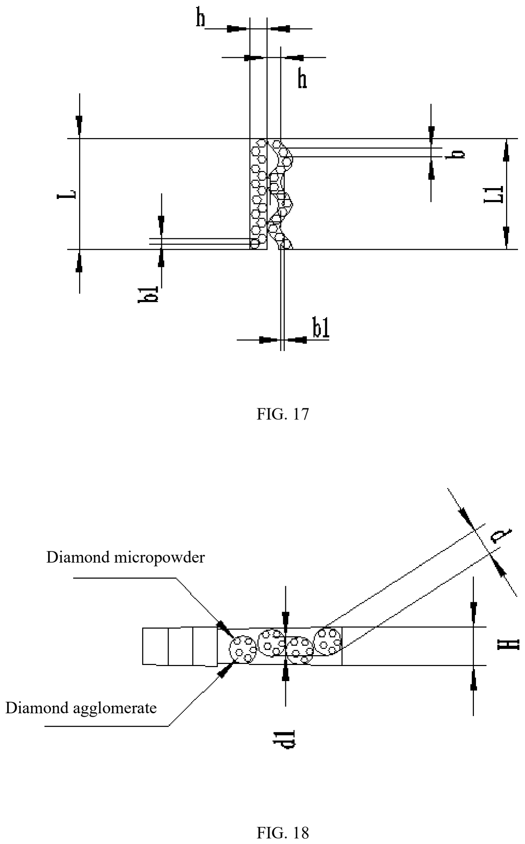

If an assembled circumferential thin sheet tooth grinding wheel is adopted, a theoretical limit value of its circumferential thickness **h** is equal to the maximum particle size within the selected abrasive particle size range (refer to Fig. 17). That is, there is at most one abrasive particle in the direction of circumferential thickness **h** *of* any point on the grinding surface of each grinding segment, and no other abrasive particle exists in the circumferential direction at this point to block the movement and discharge of grinding chips. This structure greatly eliminates the circumferential space required for chip clogging on the wheel surface, as most of this space is substituted by water channels. Chips, especially non-powdery chips, can be discharged to the water passing/chip removal channels within the minimum circumferential distance under the action of circumferential force, thereby reducing the frictional heat generated by the chips. The grinding wheel achieves the functions of grinding, cooling, and chip removal simultaneously during operation. For fine abrasive particles (referring to abrasive particles of micrometer grade size or less), the agglomerate mode can be adopted (refer to Fig. 18), and the theoretical limit value of the circumferential thickness **h** of the thin sheet teeth is equal to the diameter of the selected agglomerate; that is, there is at most one agglomerate in the direction of circumferential thickness **h** of any point on the grinding surface of each grinding segment, and no other agglomerate blocks the movement and discharge of chips in the circumferential direction at this point.

Thinness is the primary consideration on the premise of considering feasibility, strength satisfaction, and economy in the actual selection of the thickness of the grinding segments. The rigidity of the assembled grinding ring composed of grinding segments can be satisfied through the interaction of the support structures of the grinding segments.

Taking the grinding segment 3 made of diamond as an example, when the thickness of the grinding segment 3 is equal to the particle size of a single abrasive particle (see Fig. 17), the respective thicknesses satisfy the following formulas:

$$h \geq b, \; b1 \leq b, \; h = 2b - b1$$

Where, **h** is the thickness of the grinding segment 3, **b** is the particle size of the diamond particle, and **b1** is the overlapping amount of the particle size of the arranged diamond particles.

When the thickness of the grinding segment is equal to the particle size of the abrasive particle agglomerate (see Fig. 18), the respective thicknesses satisfy the following formulas:

$$H \geq d, \; d1 \leq d, \; H = 2d - d1$$

Where, **H** is the thickness of the grinding segment 3, **d** is the diameter of the diamond agglomerate, and **d1** is the overlapping amount of the particle size of the arranged diamond agglomerate.

It should be noted that the above formulas are applicable to grinding wheels with dimensions of micrometer and below, i.e., grinding wheels using fine abrasive particles of micrometer grade and below.

With the advancement of manufacturing technology, thinner sheet teeth with sufficient rigidity and strength can be made closer to the particle size of the abrasive particles. Even if the theoretically optimal value meeting the mechanism cannot be achieved, the manufactured grinding wheel can still achieve significantly improved effects compared with the prior art by moderately increasing the thickness **h** of the sheet teeth and adopting manufacturing techniques to maximize the concentration in the direction of the **L** and **L1** while minimizing the concentration in the circumferential direction of the thickness **h.**

Where, **L** is the length of the planar grinding segment, and **L1** is the linear length of the wavy grinding segment.

By adopting the above conditions, the abrasive tool has a densely distributed internal cooling structure on the grinding surface, which can prevent the atomization of cooling fluid caused by air flow barriers, and achieve efficient cooling of the abrasive particles, bond, and workpiece in an instant jet flow state at an ultra-short distance.

By adopting the above conditions, the abrasive tool has a structure with instantaneous chip removal function; the densely distributed circumferential water passing/chip removal channels allow chips to slide into the channels instantly, thus it is only required that the exposed height of the abrasive particles is greater than the cutting depth, so it is suitable for selecting finer abrasive particles. Finer abrasive particles have relatively high strength, a small cutting area during grinding, and are easy to obtain high pressure, thereby facilitating the grinding of high-hardness difficult-to-grind materials and improving grinding efficiency. Finer abrasive particles are conducive to micro-machining and reducing the surface stress of the workpiece. Finer abrasive particles have a small surface area, a small bonding area with the bond, low holding force, and are easier to handle for self-sharpening. Finer abrasive particles result in less chip adhesion and low adhesion firmness and thus it is easy for cleaning.

By adopting the above conditions, the elimination or reduction of pores in the bond is conducive to achieving high rotational strength, thereby enabling the abrasive tool to meet the conditions for high linear speed and high precision micro-grinding. It reduces plural functional requirements of the bond material, which is conducive to determining the adaptability of the bond holding capacity and improving the self-sharpening property and stability of the grinding wheel.

**Embodiment 10**

On the basis of the above embodiments, the present embodiment further provides a grinding process using the above-mentioned superhard material abrasive tool for difficult-to-machine materials, comprising the following steps:

feeding cooling fluid into the mixed cooling passage 5 through the fluid inlet, where the cooling fluid reaches the working surface of the abrasive tool through the multiple water channels 4 for cooling;

Meanwhile, feeding grinding fluid into the mixed cooling passage 5 through the fluid inlet, where the grinding fluid reaches the grinding zone of the abrasive tool through the multiple water channels 4 to grind the workpiece to be machined and the multiple grinding segments 3.

The present embodiment further provides a grinding process which is reasonable in design and simple in operation. It can superimpose auxiliary means according to the particularity of different difficult-to-grind materials, thereby improving grinding efficiency and grinding quality.

**Working Principle of the Present Invention**

In the machining process, the working layer composed of the first substrate 1, the pressing plate 2 and multiple grinding segments 3 is driven to rotate by the driving member to perform grinding treatment on the workpiece;

In this process, cooling fluid is fed into the mixed cooling passage 5 from the fluid inlet through a manner conceivable to those skilled in the art, and the cooling fluid reaches the working surface of the abrasive tool through the multiple water channels 4 for cooling;

Meanwhile, grinding fluid is fed into the mixed cooling passage 5 through the fluid inlet, and the grinding fluid reaches the grinding zone of the abrasive tool through the multiple water channels 4 to grind the workpiece to be machined and the multiple grinding segments 3. The design is reasonable, ensuring the efficiency and quality for grinding the workpiece.

The present invention is based on a functional structured technology of abrasive tools, i.e., adaptation of "two elements of abrasive particles and bond + functional structure", which can superimpose auxiliary means according to the particularity of different difficult-to-grind materials, thereby improving grinding efficiency and grinding quality.

**Beneficial Effects of the Present Invention**

It provides an impregnated grinding wheel suitable for various bonds, which can greatly reduce the R&D difficulty of multi-functional bond materials; The densely distributed internal cooling structure on the grinding surface of the grinding wheel forms micro-intermittent grinding, which is conducive to high linear speed grinding process; the circumferential thin sheet tooth structure greatly eliminates the circumferential space required for chip clogging on the wheel surface (most of this space is substituted by water channels) and has a circumferential instant chip removal structure (i.e., water passing/chip removal channels), which facilitates the discharge of chips, especially non-powdery chips, reducing the frictional heat generated by the chips, and significantly reducing the occurrence of chip clogging on the wheel and adhesion to abrasive particles; It is suitable for selecting fine abrasive particles, which helps the abrasive particles obtain high pressure during cutting and improves the sharpness of the grinding wheel.

If an assembled thin sheet tooth grinding wheel is adopted, it is conducive to realizing an ordered arrangement structure; that is, it is easy to achieve a higher concentration in the **L** direction or linear length **L1** direction of the thin sheet teeth than in the thickness direction, achieving the effect of preventing circumferential clogging of the grinding wheel, meeting the overall concentration requirements of the grinding wheel, and ensuring the service life of the grinding wheel.

If an assembled thin sheet tooth grinding wheel is adopted, it is conducive to the superposition and realization of anti-deformation structures, automatic frequency vibration grinding structures, automatic mesh surface structure formation, composite structure multi-functions, and other prior art applications, making it easy to realize the application of consolidated abrasive tools with micro-nano abrasive particles instead of free grinding.

If an assembled thin sheet tooth grinding wheel is adopted, it is suitable for end-face working, peripheral-face working, and composite-face working grinding wheels.

The use of grinding fluid-assisted processing can eliminate the adherents on the workpiece, bond, and exposed abrasive particles in the grinding zone, as well as the oxide film formed on the grinding surface of the workpiece;

The use of grinding fluid-assisted machining allows the use of an intelligent control system to control the supply amount of grinding fluid, thereby controlling the wear rate of the bond and improving the self-sharpening property of the grinding wheel.

If an assembled thin sheet tooth grinding wheel is adopted, its manufacturing process is easy to simplify complex procedures, suitable for automated and intelligent construction, and greatly reduces manufacturing costs.

It should be noted that the arrows involved in the drawings only indicate the flow direction of the fluid and have no other substantial meanings.

In addition, before machining, it is necessary to formulate the machining process according to the characteristics of the workpiece material, selecting appropriate parameters and suitable grinding wheels; 2. selecting cooling fluid; 3. selecting the liquid of the grinding fluid and the parameters of the abrasive particles.

For those skilled in the art, it is obvious that the present invention is not limited to the details of the above exemplary embodiments, and the present invention can be implemented in other specific forms without departing from the spirit or basic features of the present invention. Therefore, the embodiments should be regarded as exemplary and non-limiting in all respects. The scope of the present invention is defined by the appended claims rather than the above description, and it is intended that all changes that fall within the meaning and scope of the equivalent elements of the claims are covered by the present invention. Any reference signs in the claims should not be regarded as limiting the claims involved.

In addition, it should be understood that although this specification is described according to the embodiments, it should not be considered that each embodiment only includes an independent technical solution; the way of describing the specification is only for clarity. Those skilled in the art should take the specification as a whole, and the technical solutions in the various embodiments can also be appropriately combined to form other implementations that can be understood by those skilled in the art.

The above are only preferred embodiments of the present invention and are not intended to limit the present invention. Any modifications, equivalent replacements, improvements, etc., made within the spirit and principles of the present invention shall be covered in the protection scope of the present invention.

## Claims

1. A superhard material abrasive tool for difficult-to-machine materials, comprising a first substrate (1), a pressing plate (2) and a plurality of grinding segments (3); wherein the first substrate (1) is of an annular structure, the plurality of grinding segments (3) are distributed in the circumferential direction of the first substrate (1) and assembled into an annular structure, and a radial water channel (4) is formed between every two adjacent grinding segments (3); the pressing plate (2) is of an annular structure, which is fixedly mounted at one end of the first substrate (1) and used for pressing the plurality of grinding segments (3) tightly; a mixed cooling passage (5) for feeding grinding fluid and/or cooling fluid is formed between the pressing plate (2) and the first substrate (1), a fluid inlet communicating with the mixed cooling passage (5) is formed between one end of the pressing plate (2) and one end of the first substrate (1), and the plurality of water channels (4) are respectively communicated with the mixed cooling passage (5);

   each of the grinding segments (3) comprises a plurality of abrasive particles, and the thickness **h** of each grinding segment (3) and the particle size **b** of the abrasive particles satisfy the following formula:

$$b \leq h < 2b;$$

where the unit of both the thickness **h** of each grinding segment (3) and the particle size **b** of the abrasive particles is decimillimeter (dmm).

2. The superhard material abrasive tool for difficult-to-machine materials according to claim 1, wherein the plurality of grinding segments (3) are respectively distributed on the circumference of the first substrate (1), and the parts of one ends of the grinding segments (3) on their inner sides are recessed to form an annular step (6); the outer side of the pressing plate (2) presses the annular step (6) tightly.

3. The superhard material abrasive tool for difficult-to-machine materials according to claim 2, wherein the parts of the opposite sides of two adjacent grinding segments (3) on their inner sides are respectively recessed to form a water channel (4), and the parts of both sides of one of the grinding segments (3) on its outer side are wavy and form a water channels (4) with an adjacent grinding segment (3).

4. The superhard material abrasive tool for difficult-to-machine materials according to claim 1, wherein the plurality of grinding segments (3) are located at the edge of one end of the first substrate (1), and the pressing plate (2) presses the inner side of the edge of one end of the plurality of grinding segments (3) tightly.

5. The superhard material abrasive tool for difficult-to-machine materials according to claim 4, wherein a plurality of blades (7) are fixedly mounted at uniform intervals in the circumferential direction on the part of the first substrate (1) corresponding to the inside of the mixed cooling passage (5), the plurality of blades (7) are respectively arranged perpendicular to the first substrate (1) and extend in the radial direction of the first substrate (1).

6. The superhard material abrasive tool for difficult-to-machine materials according to claim 4, wherein a second substrate (8) is further fixedly mounted on the first substrate (1), the outer side of the second substrate (8) extends beyond the outer side of the first substrate (1) and wraps the circumference of the first substrate (1), and the pressing plate (2) is located between the first substrate (1) and the second substrate (8).

7. The superhard material abrasive tool for difficult-to-machine materials according to claim 4, wherein the plurality of grinding segments (3) are grouped in pairs, a water channel (4) with an open inner side at one end and a closed outer side is formed between the two grinding segments (3) in each group; and a water channel (4) with an open inner side and an open outer side at one end is formed between two adjacent groups of grinding segments (3).

8. The superhard material abrasive tool for difficult-to-machine materials according to any one of claims 4 to 7, wherein a plurality of bosses (9) are fixedly mounted at uniform intervals on both sides of each grinding segment (3), and each boss (9) is attached to a corresponding side of a corresponding grinding segment (3).

9. The superhard material abrasive tool for difficult-to-machine materials according to claim 8, wherein each boss (9) is of a frustoconical structure.

10. A grinding process using the superhard material abrasive tool for difficult-to-machine materials according to any one of claims 1 to 9, comprising:

feeding cooling fluid into the mixed cooling passage (5) through the fluid inlet, the cooling fluid reaches the working surface of the abrasive tool through the plurality of water channels (4) for cooling;
meanwhile, feeding grinding fluid into the mixed cooling passage (5) through the fluid inlet, wherein the grinding fluid reaches the grinding zone of the abrasive tool through the plurality of water channels (4) to grind the workpiece to be machined and the plurality of grinding segments (3).

FIG. 1

FIG. 2

FIG. 3

FIG. 4

EP 4 737 062 A1

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

Diamond micropowder

Diamond agglomerate

FIG. 18

## INTERNATIONAL SEARCH REPORT

| International application No. |
|---|
| **PCT/CN2024/108329** |

| A. CLASSIFICATION OF SUBJECT MATTER |
|---|
| B24D7/10(2006.01)i |
| According to International Patent Classification (IPC) or to both national classification and IPC |

| B. FIELDS SEARCHED |
|---|
| Minimum documentation searched (classification system followed by classification symbols) |
| IPC: B24B，B24D |
| Documentation searched other than minimum documentation to the extent that such documents are included in the fields searched |
| Electronic data base consulted during the international search (name of data base and, where practicable, search terms used) |
| CNTXT, ENTXTC, WPABSC, VEN, CJFD: 厚度, 粒径, 磨, 片, Thickness, Particle w Size, Milling, Sheeting, tooth, teeth |

| C. DOCUMENTS CONSIDERED TO BE RELEVANT |
|---|

| Category* | Citation of document, with indication, where appropriate, of the relevant passages | Relevant to claim No. |
|---|---|---|
| PX | CN 117124228 A (GUILIN MOYUAN MATERIAL TECHNOLOGY CO., LTD. et al.) 28 November 2023 (2023-11-28) claims 1-10, description, paragraphs 56-146, and figures 1-18 | 1-10 |
| A | CN 110977794 A (GUILIN CHAMPION UNION DIAMOND CO., LTD.) 10 April 2020 (2020-04-10) see description, paragraphs 41-51, and figures 1-14 | 1-10 |
| A | CN 116038583 A (GUILIN MOYUAN MATERIAL TECHNOLOGY CO., LTD. et al.) 02 May 2023 (2023-05-02) see entire document | 1-10 |
| A | CN 109940467 A (GUILIN CHAMPION UNION DIAMOND CO., LTD.) 28 June 2019 (2019-06-28) see entire document | 1-10 |
| A | CN 202528071 U (ZHENGZHOU RESEARCH INSTITUTE FOR ABRASIVES & GRINDING CO., LTD. et al.) 14 November 2012 (2012-11-14) see entire document | 1-10 |

☑ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **09 November 2024** | **11 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/108329**

**C. DOCUMENTS CONSIDERED TO BE RELEVANT**

| Category* | Citation of document, with indication, where appropriate, of the relevant passages | Relevant to claim No. |
|---|---|---|
| A | CN 207629869 U (GUILIN CHAMPION UNION DIAMOND CO., LTD.) 20 July 2018 (2018-07-20) see entire document | 1-10 |
| A | JP 2004330401 A (NORITAKE CO., LTD. et al.) 25 November 2004 (2004-11-25) see entire document | 1-10 |

Form PCT/ISA/210 (second sheet) (July 2022)

**INTERNATIONAL SEARCH REPORT**
Information on patent family members

International application No.

**PCT/CN2024/108329**

| Patent document cited in search report | | | Publication date (day/month/year) | Patent family member(s) | Publication date (day/month/year) |
|---|---|---|---|---|---|
| CN | 117124228 | A | 28 November 2023 | None | |
| CN | 110977794 | A | 10 April 2020 | None | |
| CN | 116038583 | A | 02 May 2023 | None | |
| CN | 109940467 | A | 28 June 2019 | None | |
| CN | 202528071 | U | 14 November 2012 | None | |
| CN | 207629869 | U | 20 July 2018 | None | |
| JP | 2004330401 | A | 25 November 2004 | None | |

Form PCT/ISA/210 (patent family annex) (July 2022)